# EUROPÄISCHE PATENTANMELDUNG

(11) **EP 2 887 072 A1**
(43) Veröffentlichungstag der Anmeldung: **24.06.2015**
(21) Anmeldenummer: 14188157.3
(22) Anmeldetag: 08.10.2014
(51) Int. Cl.: G01P 3/488, G01D 5/14, F16H 59/38

(54) **Drehzahlerfassendes Getriebe für ein Kraftfahrzeug**

(30) Priorität: 18.12.2013 DE 102013226394
(71) Anmelder: ROBERT BOSCH GMBH, 70442 Stuttgart (DE)
(72) Erfinder: Kaess, Udo, 74399 Walheim (DE); Droigk, Thorsten, 71640 Ludwigsburg (DE)

(57) **Zusammenfassung**

Es wird ein drehzahlerfassendes Getriebe (1) beispielsweise in Form eines Doppelkupplungsgetriebes vorgeschlagen, das mehrere Zahnräder (3) jeweils mit Schrägverzahnungen sowie ein Getriebesteuergerät (11) zur Erfassung einer Drehzahl des Getriebes (1) aufweist. Das Getriebesteuergerät (11) weist dabei einen Sensor (17) zum Detektieren von Magnetfeldänderungen sowie einen Vormagnetisierungsmagneten (19) zum Magnetisieren eines ferromagnetischen Materials auf. Der Sensor (17) und der Vormagnetisierungsmagnet (19) sind derart ausgebildet und nahe benachbart der Schrägverzahnung eines als Drehzahlerfassungszahnrad (6) bezeichneten Zahnrades (3) angeordnet, dass Änderungen des von dem Vormagnetisierungsmagneten (19) erzeugten Magnetfeldes aufgrund vorbeibewegter Zähne (5) der Schrägverzahnung des Drehzahlerfassungszahnrades (6) von dem Sensor (13) detektiert werden können. Insbesondere wenn der Sensor (17) als differentieller Hallsensor ausgebildet ist, können Messflächen des Sensors (17) derart angeordnet sein, dass eine Verbindungslinie zwischen diesen Messflächen nicht senkrecht zu einer Rotationsachse (25), sondern im Wesentlichen senkrecht zu einer Erstreckungsrichtung von Zähnen (5) des Drehzahlerfassungszahnrades (6) angeordnet ist. Dadurch kann eine Erfassungsgenauigkeit erheblich gesteigert werden.

## Beschreibung

### Gebiet der Erfindung

Die vorliegende Erfindung betrifft ein Getriebe für ein Kraftfahrzeug, bei dem eine Drehzahl von Getriebekomponenten in vorteilhafter Weise von einem Getriebesteuergerät erfasst werden kann.

### Stand der Technik

Getriebe dienen in Kraftfahrzeugen regelmäßig dazu, ein von einem Antriebsmotor erzeugtes Drehmoment mit einer veränderbaren Übersetzung an einen Antriebsstrang, der letztendlich mit den Rädern des Kraftfahrzeugs verbunden ist, zu übertragen. In dem Getriebe sind dabei eine Vielzahl von Zahnrädern unterschiedlicher Größe und unterschiedlicher Zähnezahl vorgesehen, die je nach einzustellendem Übersetzungsverhältnis unterschiedlich ineinander eingreifend angeordnet werden können.

Halb- oder vollautomatisierte Getriebe werden meist mithilfe eines Getriebesteuergerätes gesteuert. Das Getriebesteuergerät ist dabei unter anderem dazu ausgelegt, mindestens eine Drehzahl des Getriebes bzw. einer der rotierenden Komponenten des Getriebes zu erfassen. Auf Basis der derart erfassten Drehzahl(en) kann das Getriebesteuergerät Funktionen des Getriebes wie beispielsweise Schaltvorgänge geeignet steuern.

Um die Drehzahl erfassen zu können, wurde beispielsweise vorgeschlagen, an rotierenden Komponenten des Getriebes zusätzlich ein Triggerrad anzubringen. Dieses Triggerrad ist derart ausgestaltet, dass seine Drehzahl mittels eines geeigneten Sensors erfasst werden kann. Ein Verfahren zum Überwachen wenigstens eines Zahnrades eines im Betrieb befindlichen Getriebes mit einem Triggerrad ist beispielsweise in der DE 10 2010 026 085 A1 beschrieben.

Beispielsweise kann in dem Getriebe ein Multipol-Triggerrad vorgesehen sein, das sich fest montiert auf der zu detektierenden Komponente des Getriebes befindet und dessen Drehzahl mithilfe eines Drehzahlsensor-ASIC sensiert werden kann. Alternativ ist auch möglich, ein Triggerrad bestehend aus ferromagnetischem Material bereitzustellen und das Triggerrad fest an der zu detektierenden Komponente zu montieren. Mithilfe eines Sensors, der Magnetfeldänderungen detektieren kann, können dann Änderungen in einem von einem zusätzlichen Magneten erzeugten Magnetfeld aufgrund von durch das Magnetfeld bewegten Bereichen des ferromagnetischen Triggerrades detektiert werden.

### Offenbarung der Erfindung

Ausführungsformen der vorliegenden Erfindung ermöglichen ein Getriebe, bei dem eine Drehzahl erfasst werden kann, ohne dass hierfür zusätzlich vorzusehende Triggerräder in dem Getriebe integriert sein brauchen. Hierdurch können unter anderem Kosten für Triggerräder sowie damit zusammenhängender Aufwand für Logistik und Montage vermieden werden und ein Bauraum des Getriebes verringert werden.

Gemäß einem ersten Aspekt der vorliegenden Erfindung wird ein drehzahlerfassendes Getriebe beschrieben, das mehrere Zahnräder und ein Getriebesteuergerät aufweist. Die Zahnräder weisen jeweils Schrägverzahnungen auf. Das Getriebesteuergerät ist zur Erfassung einer Drehzahl des Getriebes vorgesehen. Das Getriebe zeichnet sich dadurch aus, dass das Getriebesteuergerät einen Sensor zum Detektieren von Magnetfeldänderungen sowie einen Vormagnetisierungsmagneten zum Magnetisieren eines ferromagnetischen Materials aufweist, wobei der Sensor und der Vormagnetisierungsmagnet derart ausgebildet und nahe benachbart der Schrägverzahnung eines der Zahnräder, welches hierin als Drehzahlerfassungszahnrad bezeichnet wird, angeordnet sind, dass Änderungen des von dem Vormagnetisierungsmagneten erzeugten Magnetfeldes aufgrund vorbeibewegter Zähne der Schrägverzahnung des Drehzahlerfassungszahnrades von dem Sensor detektiert werden können.

Ideen zu Ausführungsformen der vorliegenden Erfindung können unter anderem als auf den nachfolgend beschriebenen Gedanken und Erkenntnissen beruhend angesehen werden.

Es wurde erkannt, dass bei geeigneter Auslegung einer in einem Getriebesteuergerät vorgesehenen Sensorik auf das Vorhandensein zusätzlicher Triggerräder in einem Getriebe verzichtet werden kann und stattdessen eine Drehzahl des Getriebes bzw. einer mit einer Welle des Getriebes verbundenen Komponente des Getriebes wie beispielsweise eines schräg verzahnten Zahnrades direkt an diesem Zahnrad erfasst werden kann. Hierzu sollen in der Sensorik des Getriebesteuergeräts ein Sensor zum Detektieren von Magnetfeldänderungen sowie ein Vormagnetisierungsmagnet vorhanden sein. Der Vormagnetisierungsmagnet soll dabei ein geeignetes Magnetfeld erzeugen, um einen magnetischen Fluss im Bereich des Sensors zu erzeugen. Die Zahnräder in dem Getriebe sind üblicherweise mit einem ferromagnetischen Material wie Eisen bzw. einer Eisenlegierung ausgebildet. Der in dem Getriebesteuergerät vorgesehene Vormagnetisierungsmagnet wird ebenso wie der Sensor nahe benachbart der Schrägverzahnung des zu überwachenden Drehzahlerfassungszahnrades angeordnet. Die während des Rotierens des Drehzahlerfassungszahnrades durch das von dem Vormagnetisierungsmagneten erzeugte Magnetfeld laufenden Zähne der Schrägverzahnung werden jeweils temporär magnetisiert und beeinflussen dabei die im Sensor vorliegende magnetische Flussdichte. Die im Sensor vorherrschende magnetische Flussdichte hängt hierbei davon ab, ob dem Sensor eine Zahnlücke benachbart ist, wodurch sich ein hoher magnetischer Widerstand ergibt, oder ob dem Sensor ein Zahn benachbart ist, wodurch sich ein niedriger magnetischer Widerstand ergibt. Der Vormagnetisierungsmagnet wird teilweise auch als Back-Bias-Magnet bezeichnet. Die Änderungen des von dem Vormagnetisierungsmagneten erzeugten Magnetfeldes aufgrund vorbeiziehender Zähne der Schrägverzahnung des Drehzahlerfassungszahnrades können dann von dem Sensor detektiert werden und aus Signalen des Sensors kann somit auf die Drehzahl des Drehzahlerfassungszahnrades rückgeschlossen werden.

Im Gegensatz zu einem Triggerrad, wie es herkömmlich zur Drehzahlerfassung in Getrieben verwendet wurde, nimmt das Drehzahlerfassungszahnrad in dem Getriebe an einer Übertragung von Drehmomenten zwischen einer Eingangswelle und einer Ausgangswelle des Getriebes teil. Mit anderen Worten ist das Drehzahlerfassungszahnrad eines der Zahnräder, mit deren Hilfe über das Getriebe Drehmomente von dem Motor an den Antriebsstrang mit variabler Übersetzung übertragen werden.

Während die herkömmlich verwendeten Triggerräder speziell für ihren Zweck, das heißt speziell für eine Eignung, um eine Drehzahl des Triggerrades erfassen zu können, angepasst werden konnten, ist dies bei dem Drehzahlerfassungszahnrad üblicherweise nicht möglich. Stattdessen muss das Drehzahlerfassungszahnrad hauptsächlich für seinen Hauptzweck, nämlich die Übertragung von Drehmomenten innerhalb des Getriebes, ausgelegt sein. Dabei sind beispielsweise die Größe, Anordnung und Beabstandung von Zähnen der Schrägverzahnung dieses Drehzahlerfassungszahnrades für eine Übertragung von Drehmomenten optimiert. Dementsprechend kann es notwendig sein, zusätzliche Maßnahmen zu ergreifen, um dieses Drehzahlerfassungszahnrad auch dazu nutzen zu können, eine aktuelle Drehzahl detektieren zu können.

Gemäß einer Ausführungsform der Erfindung weist der in dem Getriebesteuergerät vorgesehene Sensor wenigstens zwei Messflächen zum Detektieren von Magnetfeldänderungen auf. Ein Gesamtmesssignal wird dabei durch Differenzbildung von Messsignalen beider Messflächen generiert. Die beiden Messflächen sind dabei derart angeordnet, dass eine Verbindungslinie zwischen Zentralpunkten der Messflächen im Wesentlichen senkrecht zu einer Erstreckungsrichtung von Zähnen des Drehzahlerfassungszahnrades angeordnet ist.

Unter "im Wesentlichen senkrecht" kann hierbei beispielsweise verstanden werden, dass die Verbindungslinie um weniger als 20°, vorzugsweise weniger als 10°, von einer Senkrechten zu der Erstreckungsrichtung der Zähne abweicht, das heißt in einem Winkel von zwischen 70° und 110°, vorzugsweise zwischen 80° und 100°, zu der Erstreckungsrichtung der Zähne des Drehzahlerfassungszahnrades angeordnet ist.

Der Sensor kann dabei beispielsweise als differentieller Hallsensor ausgebildet sein.

Eine einer solchen Ausführungsform zugrunde liegende Idee kann darin gesehen werden, dass der schrägen Verzahnung von zur Übertragung von Drehmomenten in einem Getriebe vorgesehenen Zahnrädern speziell bei der Auslegung und Anordnung eines Sensors zur Drehzahlerfassung Rechnung getragen wird. Beispielsweise bei Doppelkupplungsgetrieben werden die Zahnräder typischerweise mit Schrägverzahnungen ausgebildet, das heißt, die Zähne der Zahnräder verlaufen nicht parallel zu einer Rotationsachse, sondern die am Umfang eines Zahnrades vorgesehenen Zähne sind schräg zu dieser Rotationsachse angeordnet. Speziell bei solchen schräg verzahnten Zahnrädern wurde es als schwierig erkannt, eine Drehzahl anhand von Änderungen eines durch einen Vormagnetisierungsmagneten erzeugten Magnetfeldes zu detektieren. Es wurde nun erkannt, dass eine solche Detektion erleichtert werden kann, indem der Sensor, nicht wie bei einer Abtastung herkömmlicher Triggerräder üblich, senkrecht zur Rotationsachse der sich drehenden Komponente, sondern schräg zu dieser angeordnet wird. Insbesondere sollte der Sensor derart um den Betrag des Schrägungswinkels der Schrägverzahnung des Zahnrades gedreht angeordnet werden, dass die Verbindungslinie zwischen Zentralpunkten seiner Messflächen im Wesentlichen senkrecht zu der Erstreckungsrichtung der schräg gestellten Zähne des Drehzahlerfassungszahnrades angeordnet ist. Auf diese Weise kann eine Sensierung der Schrägverzahnung bzw. der durch diese hervorgerufenen Magnetfeldänderungen erheblich verbessert werden.

Alternativ kann der Sensor ein GMR-Drehzahlsensor (Giant MagnetoResistance) sein und der Vormagnetisierungsmagnet mit Ferriten ausgebildet sein. GMR-Drehzahlsensoren können eine sehr hohe Empfindlichkeit aufweisen, d.h. auch sehr schwache Magnetfeldänderungen detektieren. Dementsprechend kann bei dem Vormagnetisierungsmagneten auf starke Permanentmagneten auf Basis teurer Seltenerden-Materialien verzichtet werden und stattdessen kostengünstigere Permanentmagnete auf Basis von Ferriten eingesetzt werden.

Gemäß einer Ausführungsform kann der Sensor und/oder der Vormagnetisierungsmagnet gegenüber einer Umfangsfläche des Drehzahlerfassungszahnrads angeordnet sein. Mit anderen Worten kann der Sensor und/oder der Vormagnetisierungsmagnet in der gleichen Ebene, in der das Drehzahlerfassungszahnrad rotiert, und radial außerhalb des Drehzahlerfassungszahnrades angeordnet sein. Insbesondere der Sensor kann dabei den Zähnen des Drehzahlerfassungszahnrades sehr nahe angeordnet sein und somit die durch diese Zähne bewirkten Änderungen des von dem Vormagnetisierungsmagneten erzeugten Magnetfeldes gut detektieren. Insbesondere in einer solchen Ausgestaltung kann es wichtig sein, verschiedene Messflächen des Sensors wie vorangehend beschrieben so der Schrägverzahnung angepasst anzuordnen, dass eine Verbindungslinie zwischen diesen Messflächen im Wesentlichen senkrecht zur Erstreckungsrichtung der Zähne verläuft. In einer solchen teilweise auch als "Bottom-Read" bezeichneten Anordnung können der Sensor und der Vormagnetisierungsmagnet beispielsweise an einer Platine eines Getriebesteuergerätes gehalten sein und die gesamte Platine nahe an dem Drehzahlerfassungszahnrad angeordnet werden, so dass beispielsweise keine besonderen Maßnahmen ergriffen werden brauchen, um den Sensor und/oder den Vormagnetisierungsmagneten von einer solchen Platine zu beabstanden, um diese beispielsweise nahe an das Drehzahlerfassungszahnrad heranbringen zu können, wenn beispielsweise die Platine aus geometrischen Gründen oder Platzgründen nicht selbst nahe bei dem Drehzahlerfassungszahnrad angeordnet werden kann.

Alternativ können der Sensor und/oder der Vormagnetisierungsmagnet in einer als "Side-Read" bezeichneten Variante seitlich zu dem Drehzahlerfassungszahnrad angeordnet werden. Mit anderen Worten befinden sich der Sensor und/oder der Vormagnetisierungsmagnet in Ebenen beabstandet zu der Rotationsebene des Drehzahlerfassungszahnrades und vorzugsweise etwa auf radialer Höhe der Zähne der Schrägverzahnung.

Vorteilhafterweise ist der Sensor in einem Abstand von weniger als 10mm von dem Drehzahlerfassungszahnrad angeordnet. Indem der Sensor möglichst nahe an dem Drehzahlerfassungszahnrad, insbesondere möglichst nahe an der Schrägverzahnung dieses Zahnrades, angeordnet wird, können von dem Zahnrad bzw. der Schrägverzahnung bewirkte Variationen in einem von dem Vormagnetisierungsmagneten erzeugten Magnetfeld besonders gut sensiert werden.

Gemäß einer Ausführungsform kann das drehzahlerfassende Getriebe derart ausgelegt sein, dass das zur Erfassung einer Drehzahl verwendete Drehzahlerfassungszahnrad weniger Zähne aufweist als eine durchschnittliche Zähnezahl aller in dem Getriebe eingesetzten Zahnräder. Mit anderen Worten soll dasjenige Zahnrad des Getriebes, welches als Drehzahlerfassungszahnrad verwendet wird, weniger Zähne haben als der Durchschnitt der in dem Getriebe eingesetzten Zahnräder. Eine Idee hierzu beruht auf dem Gedanken, dass die Anzahl von Zähnen bei zur Drehmomentübertragung verwendeten Zahnrädern typischerweise nicht wie herkömmlich bei einem Triggerrad geeignet angepasst werden kann, um eine Drehzahlerfassung möglichst gut durchführen zu können. Bei herkömmlichen Triggerrädern wurde die Anzahl von Zähnen typischerweise gering gehalten, so dass auch bei hohen Drehzahlen des Triggerrades die von einem Sensor zu erfassenden Änderungen eines gemessenen Parameters keine zu hohen Frequenzen erreichten. Damit konnte der Tatsache Rechnung getragen werden, dass ein Sensor typischerweise umso komplexer und teurer wird, je höher die mit ihm zu erfassenden Schaltfrequenzen sind. Da nun bei dem hier beschriebenen Getriebe zur Erfassung einer Drehzahl kein separates Triggerrad vorgesehen werden soll, wurde es zumindest als vorteilhaft erkannt, aus der Vielzahl von Zahnrädern in dem Getriebe wenigstens ein solches als Drehzahlerfassungszahnrad auszuwählen, welches unterdurchschnittlich viele Zähne aufweist.

Beispielsweise kann das als Drehzahlerfassungszahnrad ausgewählte Zahnrad zwischen 20 und 60 Zähnen aufweisen.

Die zuvor beschriebenen speziellen Ausgestaltungen des Getriebesteuergerätes, insbesondere des darin vorgesehenen Sensors, eignen sich insbesondere für eine Anwendung in Doppelkupplungsgetrieben.

Es wird darauf hingewiesen, dass mögliche Merkmale und Vorteile eines erfindungsgemäßen drehzahlerfassenden Getriebes hierin mit Bezug auf unterschiedliche Ausführungsformen beschrieben sind. Ein Fachmann erkennt, dass die Merkmale in geeigneter Weise kombiniert bzw. ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Beschreibung noch die Zeichnungen als die Erfindung einschränkend auszulegen sind.
Fig. 1 zeigt ein herkömmliches drehzahlerfassendes Getriebe.
Fig. 2 zeigt ein drehzahlerfassendes Getriebe in einer "Bottom-Read"-Variante gemäß einer Ausführungsform der vorliegenden Erfindung.
Fig. 3 zeigt ein drehzahlerfassendes Getriebe in einer "Side-Read"-Variante gemäß einer Ausführungsform der vorliegenden Erfindung.
Fig. 4 veranschaulicht eine Anordnung eines Sensors in Bezug auf ein schräg verzahntes Zahnrad.
Fig. 5 zeigt eine vorteilhafte, einen Schrägungswinkel berücksichtigende Anordnung eines Sensors in Bezug auf ein schräg verzahntes Zahnrad.

Die Figuren sind lediglich schematisch und nicht maßstabsgetreu. Gleiche Bezugszeichen bezeichnen in den unterschiedlichen Figuren gleiche bzw. ähnliche Merkmale.

### Ausführungsformen der Erfindung

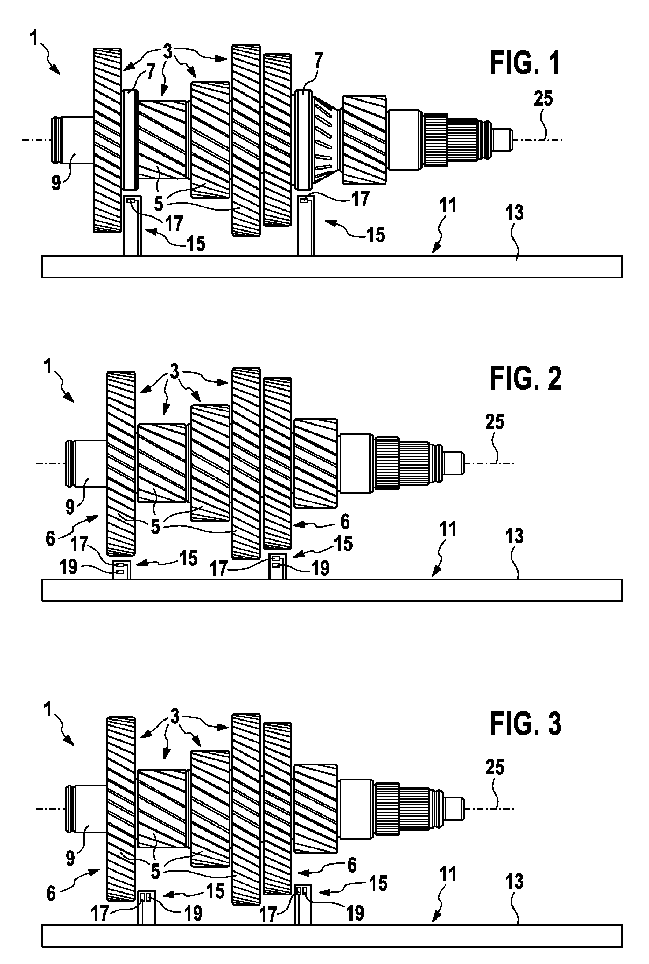

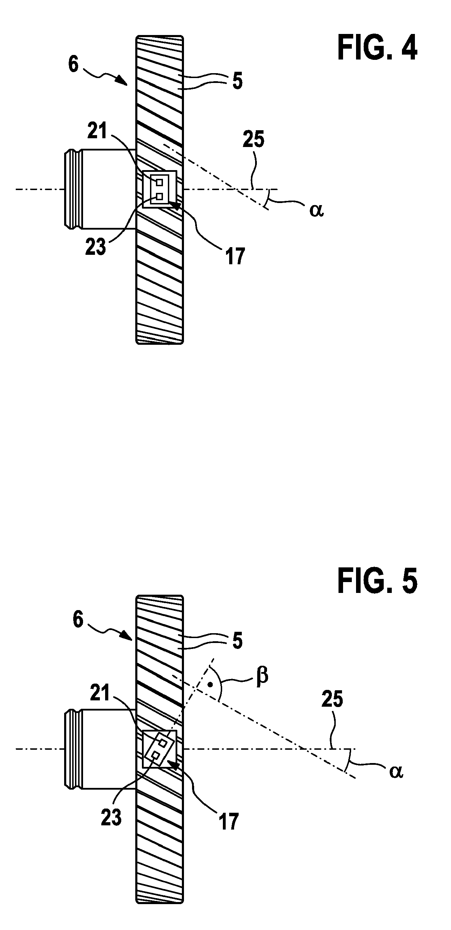

Fig. 1 zeigt ein herkömmliches Getriebe 1, bei dem eine Drehzahl von Komponenten mithilfe einer Sensorik 15 an einem Steuergerät 11 ermittelt werden kann. Das Getriebe weist mehrere Zahnräder 3 auf, welche jedes an seinem Umfang Zähne 5 einer Schrägverzahnung aufweisen, die bezüglich einer Rotationsachse 25 unter einem Winkel α schräg angeordnet sind (siehe auch Fig. 4). Die schräg verzahnten Zahnräder 3 sind an einer Welle 9 eines Doppelkupplungsgetriebes angeordnet.

Um bei dem in Fig. 1 gezeigten herkömmlichen Getriebe 1 eine Drehzahl erfassen zu können, sind an der Welle 9 zwei zusätzliche Triggerräder 7 vorgesehen. Im dargestellten Beispiel sind die Triggerräder 7 als Multipol-Triggerräder ausgebildet, bei denen sich entlang eines Umfangs des Triggerrads 7 eine Polarität einer Permanentmagnetisierung periodisch ändert. Die Triggerräder 7 sind dabei fest mit der Welle 9 und/oder benachbarten Zahnrädern gekoppelt und rotieren somit mit diesen mit. Um die Drehzahl erfassen zu können, ist ein Steuergerät 11 mit einer Platine 13 vorgesehen, an der zwei Sensoriken 15 angeordnet sind. Jede der Sensoriken 15 weist einen Sensor 17 auf, der aufgrund des durch das drehende Triggerrad 7 bewirkten sich ändernden Magnetfeldes entsprechende Signale erzeugt, die von einer Auswerteelektronik (nicht dargestellt) an dem Steuergerät 11 ausgewertet werden können, um daraus die Drehzahl zu ermitteln.

Wie in Fig. 1 gut zu erkennen, vergrößern die beiden Triggerräder 7 den Bauraum des gesamten Getriebes 1 erheblich. Außerdem müssen sie hergestellt, gelagert, montiert, etc. werden.

Fig. 2 zeigt ein Getriebe 1 gemäß einer Ausführungsform der vorliegenden Erfindung. Bei diesem Getriebe 1 wurde auf zusätzliche Triggerräder verzichtet. Stattdessen wurde ein Getriebesteuergerät 11 derart ausgebildet, dass mithilfe der daran vorgesehenen Sensorik 15 eine Drehzahl beispielsweise der Welle 9 direkt über Zahnräder 3 ermittelt werden können, die an der eigentlichen von dem Getriebe 1 zu bewirkenden Drehmomentübertragung teilnehmen.

Bei dem in Fig. 2 dargestellten Beispiel wird dabei an zwei Zahnrädern 3, welche hierin als Drehzahlerfassungszahnräder 6 bezeichnet werden, benachbart jeweils eine Sensorik 15 eines Getriebesteuergeräts 11 angeordnet. Die Sensorik 15 weist einen Sensor 17 auf, der dazu ausgelegt ist, Magnetfeldänderungen zu detektieren. Die Sensorik 15 weist ferner einen Vormagnetisierungsmagneten 19 auf, der ein magnetisches Feld erzeugt und somit ferromagnetisches Material des benachbarten Drehzahlerfassungszahnrads 6 temporär magnetisieren kann. Der Sensor 17 ist dabei zwischen dem radial weiter außen angeordneten Vormagnetisierungsmagneten 19 und dem Umfang des Drehzahlerfassungszahnrads 6 angeordnet. Mit anderen Worten ist in dieser "Bottom-Read"-Variante die Sensorik 15 gegenüber einer Umfangsfläche des Drehzahlerfassungszahnrads 6 angeordnet. Die Sensorik 15 braucht dabei nicht oder nur minimal von der Platine 13 des Getriebesteuergeräts 11 vorstehen, um in die Nähe der Umfangsfläche des Drehzahlerfassungszahnrads 6 zu gelangen.

In Fig. 3 ist eine alternative Ausführungsform dargestellt, in der die Sensorik 15 in einer "Side-Read"-Variante nicht radial außerhalb des Drehzahlerfassungszahnrades 6, sondern neben diesem angeordnet ist. Der Sensor 17 befindet sich hierbei wieder zwischen dem Vormagnetisierungsmagneten 19 und einer Stirnfläche des Drehzahlerfassungszahnrades 6 und ist möglichst nahe zu den Zähnen 5 der Schrägverzahnung des Drehzahlerfassungszahnrads 6 angeordnet.

In den Fig. 4 und 5 sind mögliche Anordnungen des Sensors 17 in Bezug auf das benachbarte Drehzahlerfassungszahnrad 6 dargestellt. Der Sensor 17 ist als differentieller Hallsensor ausgebildet und weist zwei Messflächen 21, 23 auf, welche jeweils Magnetfeldänderungen detektieren können. In einem solchen differentiellen Hallsensor kann ein Gesamtsignal dadurch erhalten werden, dass Messsignale von den beiden Messflächen 21, 23 voneinander subtrahiert werden. Auf diese Weise können zum Beispiel äußere Störeinflüsse wie zum Beispiel von außen einwirkende Magnetfelder ignoriert werden, da ihr Einfluss bei der Differenzbildung eliminiert wird.

Bei dem in Fig. 4 dargestellten Beispiel ist der Sensor 17 derart angeordnet, dass eine Verbindungslinie zwischen den beiden Messflächen 21, 23 senkrecht zur Rotationsachse 25 des Drehzahlerfassungszahnrades 6 steht. Bei einer solchen Anordnung können Probleme dahingehend auftreten, dass die Zähne 5 des Drehzahlerfassungszahnrads 6 bei einer Schrägverzahnung nicht parallel zu der Rotationsachse 25 verlaufen, sondern schräg zu dieser unter einem Winkel α angeordnet sind. Ein von dem Vormagnetisierungsmagneten 19 generiertes Magnetfeld wird von derart schräg angeordneten Zähnen 5 in einer Weise beeinflusst, die sich von dem Sensor 17 nur mit einer gewissen Ungenauigkeit detektieren lässt. Dies kann dahingehend verstanden werden, dass die Zähne 5 schräg durch das Magnetfeld hindurchlaufen und somit auch ihr Einfluss auf das Magnetfeld Veränderungen in dem Magnetfeld hervorruft, die in den Messflächen 21, 23 des Sensors 17 zu zeitlich verzerrten Signalen führen können.

Es wird daher vorgeschlagen, wie in Fig. 5 dargestellt, den Sensor 17 derart schräg zur Rotationsachse 25 anzuordnen, dass eine Verbindungslinie zwischen den beiden Messflächen 21, 23 in etwa senkrecht, das heißt beispielsweise unter einem Winkel von 80° ≤ β ≤ 100° zu der Erstreckungsrichtung der Zähne 5 des Drehzahlerfassungszahnrads 6 verläuft.

Mithilfe von Ausführungsformen des erfindungsgemäßen drehzahlerfassenden Getriebes können unter anderem folgende Vorteile erreicht werden:
- Da Kosten für einen Vormagnetisierungsmagneten deutlich geringer sind als für ein Multipol-Triggerrad, können insgesamt Kosten eingespart werden;
- das Getriebe kann durch den Wegfall der Triggerräder prinzipiell schlanker konstruiert werden bzw. es steht mehr Bauraum kundenseitig zur Verfügung;
- es entfallen eine Montage, eine zugehörige Logistik, etc. für vorzusehende Triggerräder;
- eine Zähnezahl von Getriebezahnrädern ist in der Regel deutlich höher als eine maximal realisierbare Polpaarzahl eines Multipol-Triggerrades. Hierdurch können pro Umdrehung mehr Sensorpulse erzeugt werden, was die Genauigkeit der Drehzahlerfassung steigern kann;
- aufgrund einer möglichen niedrigeren Bauhöhe von Sensordomen einer Sensorik können zum Beispiel Kosten für Aufbau- und Verbindungstechnik bei einem Getriebesteuergerät sinken;
- ein Einsatz einer integrierten Sensorik, beispielsweise eines ASICs, die einen integrierten Vormagnetisierungsmagneten trägt, ist möglich;
- insbesondere in der "Bottom-Read"-Variante ist eine niedrige Bauhöhe möglich und Sensordome können gegebenenfalls entfallen, das heißt eine Sensorik, beispielsweise ein ASIC, kann direkt auf einer Verdrahtungsebene wie beispielsweise direkt auf der Leiterplatte platziert werden.

## Patentansprüche

1. Drehzahlerfassendes Getriebe (1) aufweisend:
mehrere Zahnräder (3) jeweils mit Schrägverzahnungen;
ein Getriebesteuergerät (11) zur Erfassung einer Drehzahl des Getriebes (1);
**dadurch gekennzeichnet, dass**
das Getriebesteuergerät (11) aufweist:
einen Sensor (17) zum Detektieren von Magnetfeldänderungen; und
einen Vormagnetisierungsmagneten (19) zum Magnetisieren eines ferromagnetischen Materials;
wobei der Sensor (17) und der Vormagnetisierungsmagnet (19) derart ausgebildet und nahe benachbart der Schrägverzahnung eines der Zahnräder (3), welches als Drehzahlerfassungszahnrad (6) dient, angeordnet sind, dass Änderungen des von dem
Vormagnetisierungsmagneten (19) erzeugten Magnetfeldes aufgrund vorbeibewegender Zähne (5) der Schrägverzahnung des Drehzahlerfassungszahnrads (6) von dem Sensor (17) detektiert werden können.

2. Getriebe nach Anspruch 1, wobei der Sensor (17) wenigstens zwei Messflächen (21, 23) zum Detektieren von Magnetfeldänderungen aufweist und ein Gesamtmesssignal durch Differenzbildung von Messsignalen beider Messflächen (21, 23) generiert wird;
wobei die beiden Messflächen (21, 23) derart angeordnet sind, dass eine Verbindungslinie zwischen Zentralpunkten der Messflächen (21, 23) im Wesentlichen senkrecht zu einer Erstreckungsrichtung von Zähnen (5) des Drehzahlerfassungszahnrads (6) angeordnet ist.

3. Getriebe nach Anspruch 2, wobei die beiden Messflächen (21, 23) derart angeordnet sind, dass die Verbindungslinie zwischen Zentralpunkten der Messflächen in einem Winkel von zwischen 70° und 110°, vorzugsweise zwischen 80° und 100°, zu der Erstreckungsrichtung von Zähnen des Drehzahlerfassungszahnrads (6) angeordnet ist.

4. Getriebe nach einem der Ansprüche 1 bis 3, wobei der Sensor (17) ein differentieller Hallsensor ist.

5. Getriebe nach einem der Ansprüche 1 bis 3, wobei der Sensor (17) ein GMR-Drehzahlsensor ist und der Vormagnetisierungsmagnet mit Ferriten ausgebildet ist.

6. Getriebe nach einem der Ansprüche 1 bis 5, wobei der Sensor (17) und/oder der Vormagnetisierungsmagnet (19) gegenüber einer Umfangsfläche des Drehzahlerfassungszahnrads (6) angeordnet ist.

7. Getriebe nach einem der Ansprüche 1 bis 6, wobei der Sensor (17) in einem Abstand von weniger als 1cm von dem Drehzahlerfassungszahnrad (6) angeordnet ist.

8. Getriebe nach einem der Ansprüche 1 bis 7, wobei das Drehzahlerfassungszahnrad (6) in dem Getriebe an einer Übertragung von Drehmomenten zwischen einer Eingangswelle und einer Ausgangswelle des Getriebes (1) teilnimmt.

9. Getriebe nach einem der Ansprüche 1 bis 8, wobei das Drehzahlerfassungszahnrad (6) weniger Zähne (5) aufweist als eine durchschnittliche Zähnezahl aller in dem Getriebe (1) eingesetzten Zahnrädern (3).

10. Getriebe nach einem der Ansprüche 1 bis 9, wobei das Drehzahlerfassungszahnrad (6) zwischen 20 und 60 Zähnen (5) aufweist.

11. Getriebe nach einem der Ansprüche 1 bis 10, wobei das Getriebe (1) ein Doppelkupplungsgetriebe ist.
